# EUROPEAN PATENT SPECIFICATION

(11) **EP 3 185 094 B1**
(45) Date of publication and mention of the grant of the patent: **26.02.2020**
(21) Application number: 16206244.2
(22) Date of filing: 22.12.2016
(51) Int. Cl.: G05B 19/042

(54) **PROCESS CONTROL SYSTEM AND DEVELOPMENT SYSTEM FOR HUMAN MACHINE INTERFACE**
PROZESSSTEUERUNGSSYSTEM UND ENTWICKLUNGSSYSTEM FÜR MENSCH-MASCHINE-SCHNITTSTELLE
SYSTÈME DE COMMANDE DE PROCESSUS ET SYSTÈME DE DÉVELOPPEMENT POUR INTERFACE HOMME-MACHINE

(30) Priority: 22.12.2015 DE 102015122595
(43) Date of publication of application: 28.06.2017
(73) Proprietor: Elco (Tianjin) Electronics Co., Ltd., Xiqing Economic Development Area Tianjin 300385 (CN)
(72) Inventor: Hennig, Stefan, 01099 Dresden (DE)
(74) Representative: Harrison, Robert John

(56) References cited:
- GB-A- 2 512 999
- US-B2- 7 770 109

## Description

### Field of the Invention

The invention relates to the definition, design, and implementation of human machine interfaces (HMI) for a process control system.

### Background of the Invention

HMIs are used to monitor and control the operative states of machines and other facilities in an automated plant.

### Prior Art

Many systems and methods are known for design human machine interfaces. For example, US Patent Application No. US 2014/0100668 teaches a method for the flexible configuration of a process control system or plants that allow draft changes or modifications to be made. This application does not teach how to convert the display of the designed process control system to be transferred between different devices.

German Patent Application DE 11 2005 001 031 T5 (Fisher-Rosemount Systems) teaches a graphic interface for a process control system with user interface. The user interface includes a real time display for more than one of the function in the process control system. The patent application teaches the programming of different user interfaces for different users or user groups and for display on different devices. The programming is carried out individually for each one of the devices, which is time-consuming and may lead to errors. The patent application fails however to disclose how the user interface is developed and does not include details about how to generate the user interface for a plurality of display devices running different software platforms. A database is included in the process control system for storing a plurality of elements which can be used to generate the views.

German Patent Application DE 10 2014 103 377 (Fisher-Rosemount Systems) teaches a method and system for a process control system which includes a plurality of display devices. The DE '377 patent application teaches the use of a configuration system and a configuration database that is programmed by a user. Information from various ones of the user interfaces can be passed to other ones of the user interfaces. These user interfaces are created dynamically. It is mentioned that the display can be adapted for one device to another device, but the of DE '377 does not detail the method by which the human machine interface can be converted from one device for display on another device.

UK Patent Application No GB 2512999 (Fisher-Rosemount Systems) teaches a system for operating a process control plant includes a unitary, logical data storage area including one or more data storage devices configured to store, using a common format, process data corresponding to the process plant, tile process data including multiple types of process data selected from configuration data, measurement data, hatch data, continuous data, and event data. The system also includes a first user interface device communicatively coupled via a network to the unitary, logical data storage area and operable to execute one or more first routines, each first routine for performing a control function, an operation function, a configuration function, a maintenance function, a data analysis function, a management function, a quality control function, or a security function. Further, the system includes a second user interface device communicatively coupled via the network to the unitary, logical data storage area and operable to execute one or more second routines, each second routine corresponding to one of the first routines.

The first user interface device is operable to pass to the second user interface device state information indicative of one or more first routines operating on the first user device such that the second user interface device, upon receiving the state information, executes one or more of the second routines corresponding to one or more of the first routines operating on the first user interface device.

One issue with the dynamic creation of user interfaces, as suggested in the DE '377 or GB '999 patent applications is that the created user interfaces will vary at different times and under different circumstances. The user will therefore see a different arrangement on the display device. This will be distracting for the user, who will have to check carefully the position of any elements displayed. There is also a risk that the user may make a mistake either in selecting a wrong element or reading incorrect information from the display device. This will lead to incorrect control of the process, which is at the least problematic and potentially catastrophic.

In other technological fields, the requirement to change a display dependent on screen size is known. For example, US Patent No US 7,770,109 teaches a method for displaying multiple items of the content and arrangement and formatting of the content for display on different types of screens. The method taught in the patent does not consider, however, that in a process control system some items in the content are of less relevance than other items.

### Summary of the Invention

A process control system for an automated plant is taught in this document. The process control system comprises a plurality of displays for displaying a process monitoring display of the automated plant on one or more devices. The one or more devices are running a plurality of device platforms with different requirements for driving the display. The process control system also includes a database which is connectable to one or more of sensors or control elements in the automated plant and the database comprises process data. A model repository comprising at least platform information, an initial visual applications model generated on a first one of the plurality of displays and another visual applications model adapted for use on another one of the plurality of displays is further included. The platform information comprises information about the display for the device platform and the initial visual applications model comprises a plurality of view entities and at least one of process control metadata for controlling the control elements or measuring metadata defining measurements receivable from the plurality of sensors. The other visual applications model is generated from the initial visual applications model using the platform information. A processor is connected to the database and to the display and a display processor is used for generating for the other one of the plurality of displays the generated other visual applications model. This system enables the display developed on one device to be shown on any display device for which platform information is available after automatic conversion. Unlike in the systems known in the art.
the automatic conversion is carried out during the development phase of the system and not at run time. Thus a developer of the interface can ensure that the interface shown to the user on any one of the displays is consistent. This reduces the risk of the user making a mistake when, for example, using control elements on the display to adjust the process or misreading variable parameters.

The display processor can select for the other visual applications model a subset of the view elements based on the platform information. This reduces the amount of processing power involved in generating the display and may also reduce storage requirements on display devices with a limited amount of storage space available. Not all storage devices require all the view elements. It will be noted that the view elements comprise display widgets with variable values, which can be dynamically altered across all the display devices.

The definition of the variable values is derivable from at least one of the process metadata or the measuring metadata and are representative of at least one of control live data or measurement live data.

The process metadata comprises at least one of control element identification, operating time, control dimensioning parameters, maximum and minimum values and the measurement metadata comprises at least one of measurement dimensioning parameters.

A computer-implemented method to generate a display, for one or more devices, of the automated plant is also described. The method comprises creation of an initial visualisation applications model on a first device using one or more view entities and platform information; storing the initial visual applications model in a model repository; generating using platform information for a second device and corresponding view entities for the second device, another visual applications model for display on the second device from the created and stored initial visualisation applications model; and storing the other visual applications model in the model repository.

### Description of the Drawings

Fig. 1 shows an overview of an automated plant including a process control system
Fig. 2 shows a display for displaying one example of a human machine interface illustrating the automated plant.
Fig. 3 shows an overview of a visual applications model
Fig. 4 shows the coupling of the sub-models in the visual applications model.
Fig. 5 shows relationships between the entities of the navigation subsystem in the human-machine interface.
Fig. 6 shows relationships between the entities of the view subsystem in the human-machine interface.
Fig. 7 shows an example of a sub-view generation and the sub-navigation resulted from this sub-view generation.
Fig. 8 shows the main property classes of the human-machine interface component and their relation to other sub-models.
Fig. 9 shows an example of the display of the human-machine interface on a tablet.
Fig. 10 shows an example of the display of the human-machine interface on a smartphone.
Figs. 11A and 11B show an outline of the method of this disclosure.

### Detailed Description of the Invention

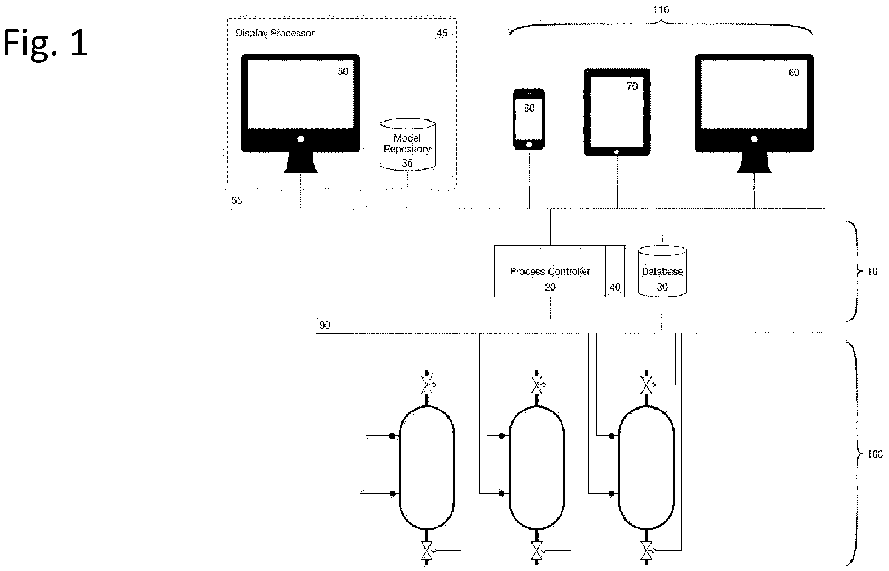

Fig. 1 shows an overview of an automated plant 100 including a process control system 10 for implementation in a human-machine interface as taught in this disclosure. The process control system 10 has a process controller 20 which is connected to a database 30 and to the automated plant 100. The database 30 holds the data for producing the human-machine interface and the processor controller 20 includes one or more processors 40 for processing the data and operating the automated plant 100. The process control system 10 further includes a model repository 35 which holds details of the visualization application models developed for the process control system 10 of this document.

In one non-limiting aspect, the process control system 10 will control a manufacturing plant as the automated plant. In another aspect, the process control system 10 will be used to control one or more machines or machine tools in the automated plant 100. These aspects are not limiting of the invention.

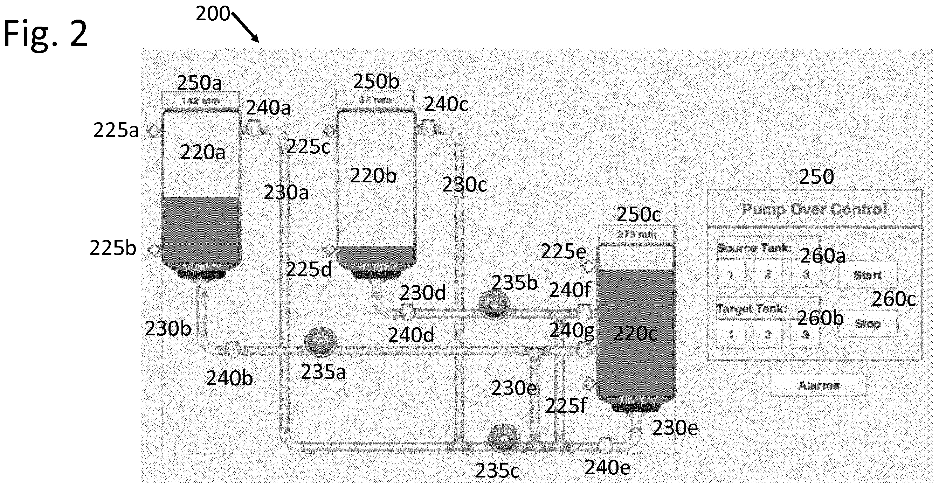

The automated plant 100 may include a display processor 45, which is used to generate one or more views of the automated plant 100 and to derive a display representing the human machine interface on a device. The display processor 45 will include at least one workstation 50, as shown in Fig. 1 connected to a network 55, which is used by an engineer or developer to program the human-machine interface in form of a visualization application model. The human-machine interface is generated from the visualization application model in the display processor 45. The human machine interface will be displayed after generation in displays 110. It will be noted that the display processor 45 may not be available to the process control system 10 during runtime of the process. The display processor 45 will include therefore the model repository 35 to hold all visual application data such as, but not limited to, the visualization application model and a set of preconfigured platform definitions. The automated plant 100 of Fig. 1 has one or more manufacturing elements, such as but not limited to tanks, pipes, valves, and sensors which are connected to each other and will be explained in more detail in connection with Fig. 2. The sensors and valves are connected between the plant 100 and the process controller 20 by one or more control lines 90 through which data can be sent from the plant 100 to the process controller 20 and/or to the database 30 and furthermore control signals can be sent to the sensors or the valves from the process controller 20. The manufacturing elements are represented on the display by view entities, as will be explained later.

One or more further workstations 60 can also be connected to the process controller 20 and/or to the database 30 through a network 55, such as an intranet or through the internet. The further workstations 60 allow an operator at the workstation 60 to view the manufacturing elements and their functioning and, if required, to intervene in the operation of the automated plant 100.

One or more tablets 70 or smartphones 80 with a display 110 may also be connected to the process controller 20 and/or to the database 30 in order to enable a user of the tablet 70 and/or the smartphone 80 to also view the human-machine interface of the automated plant 100. As will be explained later, the user of the tablet 70 or the smartphone 80 may not see all of the entities displayed on the display of the tablet 70 or the smartphone 80 as this would not be possible due to the small screen size of the display of the tablet 70 or the smartphone 80 and the display processor 45 of this disclosure enables an automated selection
of the view entities to be made to efficiently use the available resources of the tablet 70 or the smartphone 80 whilst enabling the user to view relevant information and also control the automated plant 100. The display processor 45 will generate dedicated human machine interfaces for each of the smartphone 80, tablet 70, and/or the workstation 60.

Fig. 2 shows a non-limiting example of a human machine interface produced on a display 200 of the workstation 60 of the automated plant 100 using the principles outlined in this document. In this example, the automated plant 100 has three tanks 220a, 220b and 220c, which are connected by a series of pipes 230a-e and controlled by a series of valves 240a-g. The tanks 220a-c may have a plurality of fuel level sensors 225a-f. The pumps 235a-c may connect a plurality of pipes 230a-e. The illustration of Fig. 2 shows a first example of the human-machine interface 200 of the automated plant 100 on the workstation 60 having a large, e.g. 19 inch, display.

It will be seen that the display 200 of the human-machine interface shows fill levels in each of the three tanks 220a, 220b and 220c. Furthermore, the display 200 includes a so-called faceplate 250, which enables to the operation of the automated plant 100 by changing process values using the process control system 10. The change of the process values will send control signals along the connections 90 shown in Fig. 1 from the process controller 20. It will also be understood that the sensors can send data along the control lines 90. For example, it is possible that the sensors include fill sensors in the tanks 220a-c and can send data representing the fill level of the tanks 220a-c at regular intervals. The process controller 20 will convert the data sent by the sensors, such as the fill-level sensors 225a-c, in warning signals or alarm signals if the tanks 220a-c become too full or too empty. Such warning signals or alarm signals can also be generated by the sensors themselves.

In order to produce the display 200, the human-machine interface is generated by the display processor 45. The human-machine interface is developed using the following information/data, which can be stored in the model repository 35 or elsewhere:

User interface - the model repository 35 will contain a plurality of view entities. The view entities can, for example, be displayed as widgets on the display to display the different states of the automated plant 100 or to allow the operators to enter data which will be sent to the automated plant 100.

Process data - the view requires the process data of the automated plant 100. This process data can be gathered from tank sensors, such as the fill-level sensors 225a-c, in the tanks 220a-c and the flow sensors 235a-f in the pipes 230a-e, from the process controller 20, or from the database 30. It will be appreciated that the sensors and the pumps 235a-c are not limiting of the invention and that there may be other ones of the sensors present.

Custom scripts - these custom scripts enable a programmer to provide extended functions and methods to enable new features to be developed. These custom scripts may not be available in some implementations of the process control system described in this document.

Platform information - this information describes the configuration of the platform for the device on which the display is to be generated from the view. The information will include, but is not limited to, the operating system and screen size, screen resolution, screen unit system (pixel vs. retina pixel vs. density points etc.), interaction means (touch, multi touch, pointer device, ...), and peripheries like GPS, camera, gyroscope etc. (each of which with its own characteristics). Furthermore, platform information comprises information about environment where the device will be used, e.g. indoor or outdoor use infer different light conditions, silent or noisy environments allow or disallow voice interaction etc. Platform information also comprise information about the user who will use the device in the given environment, e.g. older users need bigger font sizes, bigger buttons, and louder voice output than younger ones, users wearing gloves cannot use touch screens etc.

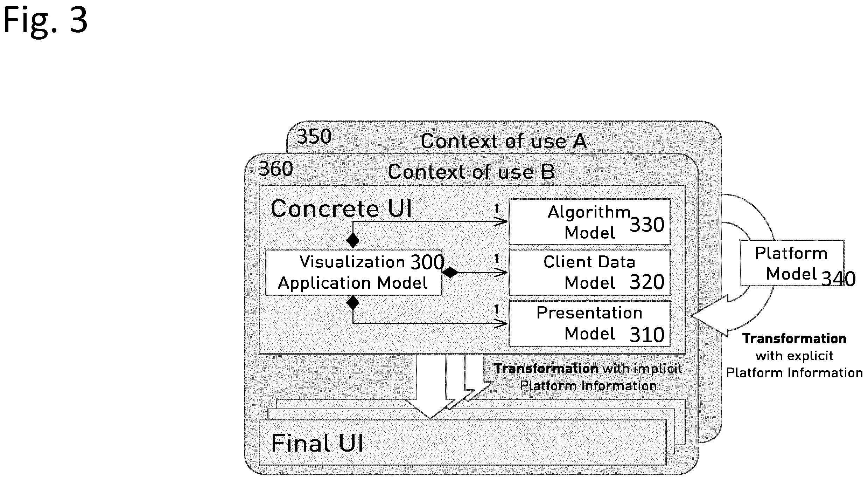

Fig. 3 shows how this information and data is structured in a visualization application model 300. The visualization application model 300 serves as a container and enables a definition of the meta-information about the view, that is implemented by the visualization application model. The visualization application model 300 is the root model element and defines entities to capture metadata about the HMI project. The visualization application model includes the following sub-models: a presentation model 310, a client data model 320, an algorithm model 330, and a platform model 340.

The presentation model 310 defines the view entities used to design a view for the display 110 presented as the human-machine interface. These view entities include, but are not limited to, widgets, such as buttons, etc.

The client data model 320 defines process metadata, which comprise all information required by the devices (so-called HMI clients for the displays 110) to successfully establish a connection via network 55 and transfer data from process controller 20, from the database 30, and/or from the automated plant 100 to be displayed. The HIM clients include, but are not limited to, the workstation 60, the tablet 70, or smartphone 80. The process metadata provides connection metadata to provide a network configuration to the process controller 20 in the process control system 10 and defines the process control metadata obtained by the process controller 20 or the database 30 to control the process in the automated plant 100 and to produce the human-machine interface. The process control data could be either static and read out only once or could be continually changing. In the latter case, the process control live data from the process in the automated plant 100 are periodically read into the process control system 10. The process metadata includes, but is not limited to, at least one of control element identification, operating time, control dimensioning parameters, maximum and minimum values

The algorithm model 330 provides means to define custom scripts in order to add custom functionality to the system.

The platform model 340 provides platform entities to configure the platform on which the display will be executed.

It will be appreciated that the presentation model 310, the client data model 320, the algorithm model 330 and the platform model 340 are not independent from each other. There exist relationships between the entities defined in the models.

In order to transform the visualization application models 300 into runtime artifacts which are executed as views on one or more of the devices, two different types of transformations (a so-called horizontal transformation and a vertical transformation) need to be distinguished and will be explained below.

The first type of transformation is a horizontal transformation and relates to the context of use 350, 360 and is defined by the following set of information:

The device: the tablet 70, the smartphone 80, or the workstation 60. Each of one of these devices is characterized by a particular screen size, interaction means (touch, multi touch, pointer device, ...), and peripheries like GPS, camera, gyroscope etc. (each with own characteristics).

The environment: indoor or outdoor use require differing lighting conditions; silent or noisy environments allow or disallow voice interactions...

The user: older users need bigger font sizes, bigger buttons, and louder voice output than younger ones, users wearing gloves cannot use touch screens...

These types of information about the context of use are captured by the platform model 340 and will be stored in the database 35. The information serves as an input for the so-called horizontal transformation, in which a visualization application model 300 is transformed from one context 350 of use to another context of use 360 in order to meet the requirements of the different devices, or environments, and/or users.

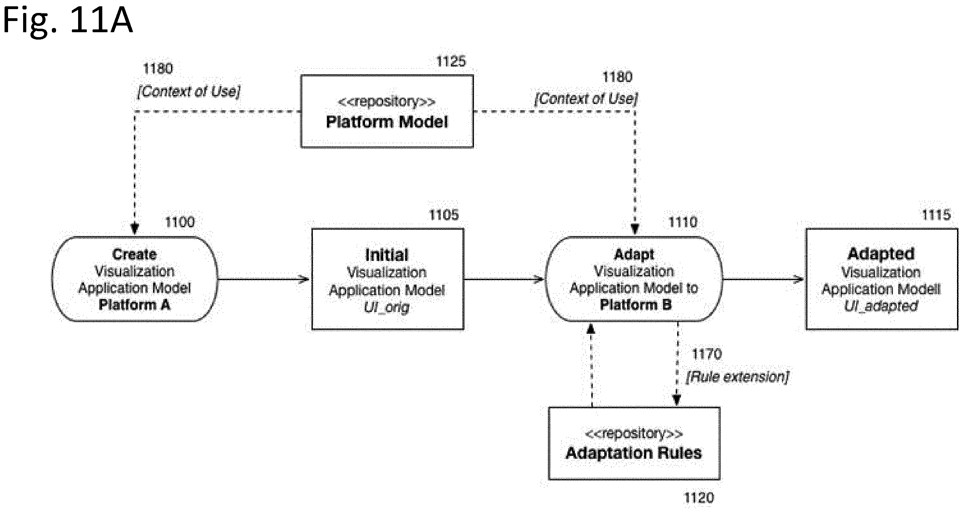

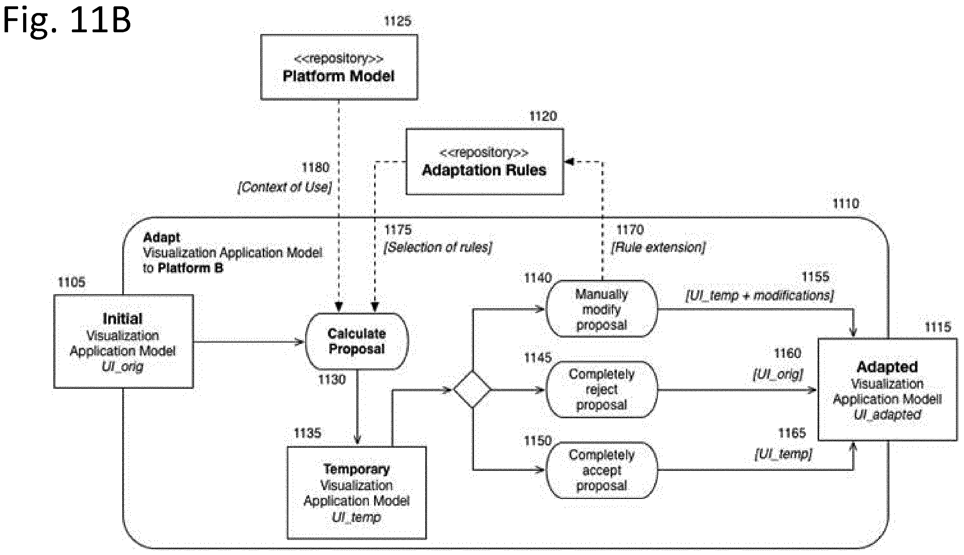

Figs 11A and 11B show an outline of the horizontal transformation for creating and transforming the human machine interface to various ones of the devices. Unlike in the prior art, this transformation is not carried out in real time, but during development of the control system. This reduces the amount of complexity and ensures that the display is reproducible. The reproducibility ensures that the user is familiar with the location and position of the view elements in the display and thus reduces the risk of accidents due to the user making incorrect decisions based on a changeable display.

In Fig. 11A the visual applications model is first manually created in step 1110. The creation of the visual application model 1100 requires knowledge of the context of use 1180, which in turn requires information about the type of platform being used and stored in the model repository 1125. The result of the first manual step 1100 is an initial visualization application model 1105, which is created for a certain display, e.g. for the workstation 60, and stored in the model repository 35. Generally, the display used for the creation of the initial visual application model 1105 will be the one with the largest screen such as the workstation 60, but this is not limiting of the invention.

The visualization application model can then in step 1100 be adapted for use in the display of another type of device. This will also require knowledge of the context of use 1180 and any necessary information for the horizontal transformation can be obtained from the model repository 1125. Furthermore, the automatic adaptation requires access to the adaption rules for the display or device, which are stored in repository 1120. The result of the adaptation is another visualization application model 1115 which is stored in the model repository 35. The adaption in step 1110 can be carried out manually or automatically (or indeed semi-automatically, with some manual input), as well be indicated below.

Fig. 11B shows this adaption in more detail. The same reference numerals are used in Fig. 11B to represent the same elements and will not be explained again. Using the adaption rules from the repository 1120 and the platform information from model repository 1125, a proposal visualization application model is calculated in step 1130 and a temporary visualization application model 1135 produced. This can be displayed to the user.

The user has then three options. In a first option 1140, the user can manually amend the temporary visualization applications model 1135 to produce the adapted visualization application model 1115. In a second option 1145 the user can completely reject the proposal and the temporary visualization application model 1135 will be deleted. The view 60 presented on the display of the device being used will then be based on the original visualization application model 1105. This is unlikely to be the best format for the display. Finally, in a third option 1150 the user is able to accept the temporary visualization application model 1135 and use this temporary visualization applications model 1135 as the adapted visualization applications model 1115.

The adapted visualization application model 1115 can serve in another adaption process as the input model 1105. For instance, when adapting the display 110 on the workstation 60 to the display 110 on the tablet 70, the display 110 for the workstation 60 is the initial visualization application model 1105 and the display 110 for the tablet 70 is the adapted visualization application model 1115. In a next iteration, the tablet 70 display will be further adapted to the display 110 for the smartphone 80. In this case, the display 110 for the tablet 70 is the input model 1105 with the visualization application model 1115 adapted to the display 110 for the smartphone 80 as output.

The vertical transformation converts the visualization application model 300 (which will comprise the initial visualization application model 1105 and zero or many adapted visualization application models 1115) into source code used by one or more software technologies. The technology is characterized by the programming language, software stacks (APIs, SDKs, ...), and relevant device information.

Figs. 11A and 11B shows that different devices require different technologies. It would be possible to use a web based solution displayed in a browser to work on all devices. However, the web-based solutions have limitations when it comes to make use of device's system resources and therefore the process control system of this disclosure is used to take into account the different types of devices and perform the vertical transformation. It will be appreciated that the user can also enter his or her own rules for the transformation, which will also be stored in the model repository and can be used for automatic adaption in the future. Similarly, the manual adaption carried out in step 1140 can be stored and employed for future adaptions.

**Table 1:**

| **Device** | **Programming Language** | **Software Stack** | **Remarks** |
|---|---|---|---|
| **iPad** | Objective C, Swift | iOS | Full feature set available |
| | HTML, java script | Dojo, ... | No access to device functions and peripheries |
| **Samsung Galaxy** | Java | Android | Full feature set available |
| | HTML, Java script | Dojo, ... | No access to device specific functions and peripheries |

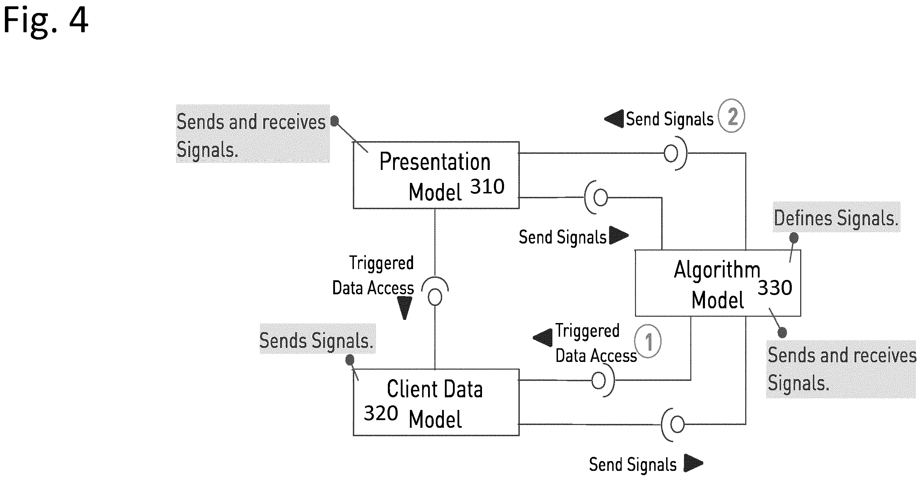

Fig. 4 shows how the different sub models are loosely coupled by means of signals. Data entities of the client data model 320 emit signals when data values have changed. These changes in the data values come through the control lines 90 from the sensors or are entered into the faceplate 250. View entities from the presentation model 310 consume those signals from the client data model 320 in order to get notified about changes in the data values on which the view entities need to react. The signals are defined in the algorithm model 330.

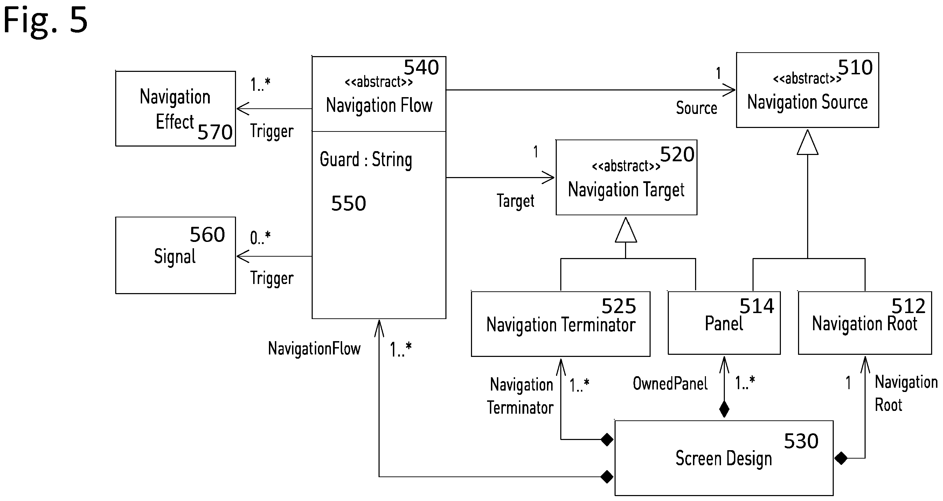

Basic entities which make up the description of the human-machine interface are panels and navigation flows. The panels form the containers in which all of the view entities (widgets) are encapsulated that will be used in the user interface shown in the display of a certain device. Only one panel can be shown at a single time on the display of the device. The panel is often also referred to as a screen. The navigation flows connect the panels and form a navigation structure through the application. Fig. 5 shows the relevant model entities and their relationships.

Fig. 5 shows that relationships or navigation flows that connect a so-called navigation source 510 with one navigation target 520. The navigation source 510 can either be a navigation root 512 or a panel 514 and it will be seen that the navigation root 512 and the panel 514 are objects derived from the navigation source 510 and thus inherit properties from the navigation source 510.

The navigation root 512 forms the entry point into the human machine interface program and there can only be one navigation root 514. The navigation target 520 can either be the panel 514 or a navigation terminator 525. The navigation terminator 525 defines the exit point of the human machine interface program. There must be at least one navigation terminator 525. The navigation terminator 525 and the panel 514 are therefore objects derived from the navigation target 520.

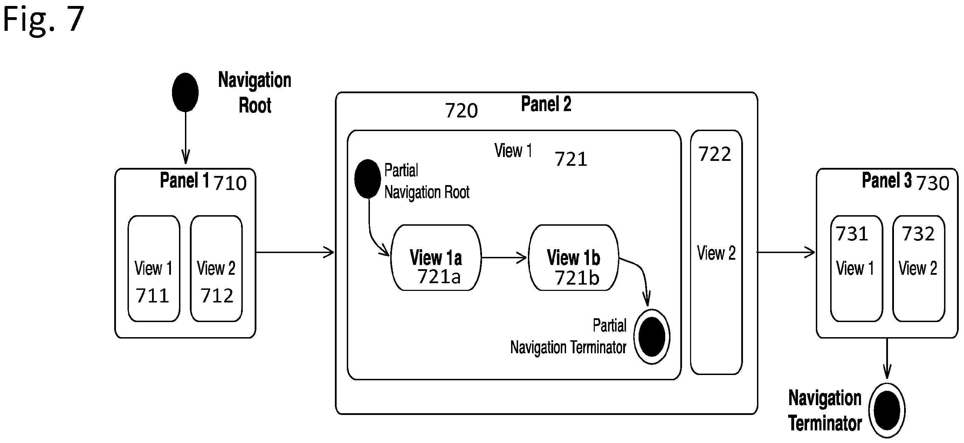

With this, the entire navigation flow through the application can be defined, starting by the navigation root 512 to a first one of the panels 514, going further through other ones of the panels 514 and/or looping through the panels 514, and leaving the application through the navigation terminator 525. Fig. 7 shows an example navigation (sub-navigation will be explained later).

A navigation effect 570 is, for example, a user interaction with the device and this will trigger one of the navigation flows 540. For example, the user might click on a button to trigger a navigation effect 570 which will in turn trigger the corresponding navigation flow 540.

It is also possible that a signal 560 from, for example, one of the sensors may trigger the navigation flow 540. An optional guard 550 may include a condition which will evaluate the relevant sensor value. If the condition is met, the navigation flow 540 triggers. If the condition is not met, the navigation flow 540 will not trigger. For example, if the sensor value indicates that the fill-level of one of the tanks 230a-c is below a critical value, then the navigation flow 540 to a details screen of the tank will be triggered and the display 110 will show another view with extended information to enable the use to identify a critical issue.

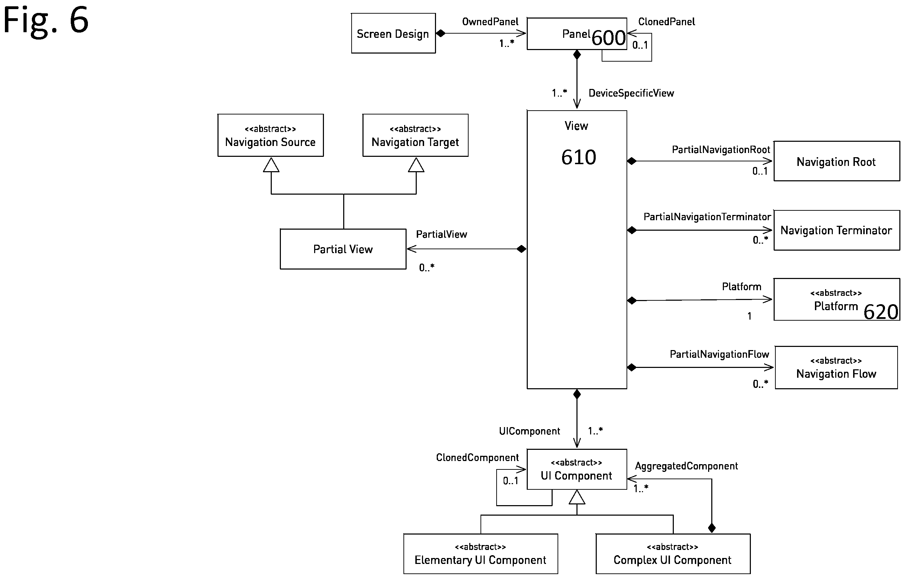

Fig. 6 shows an overview of a view subsystem. It shows how the view is embedded in its context of use. The panel 600 contains an arbitrary number of views 610. The view 610 is bound to a certain one of the devices. In other words, the view 610 is always platform (device) specific. Hence, the view 610 has a reference to the platform model 620 and uses its platform specific information stored in the model 620 as modeling constraints.

When the view 610 is mapped to a smaller device to generate the human-machine interface, with a small screen size, the view 610 may need to be divided into two or more partial views. This particularly happens if all of the contents shown on the bigger screen size do not fit to dimensions of the smaller screen size while no view elements in the contents can be left out. In this aspect, the bigger screen will be divided into one or many smaller screens.

When using such partial views, the navigation subsystem (as shown in Figure 5) needs to be extended with a sub-navigation subsystem (as shown in Fig. 7).

Fig. 7 shows an example of the sub-navigation after dividing a view into two partial views. In this aspect, the first panel 710 has two views 711 and 712 for two different devices. This first panel 710 is changed to produce a second panel 720. The second panel 720 has also two views 721 and 722. However, the device displaying the view 721 has a screen size that is too small to display all of the view 721 and therefore the display processor 45 splits up the view 721 into two small views 721a and 721b using the available information.

The views contain one or more human-machine interface components. The human-machine interface component is a building block which both displays information to the operator and enables the operator to interact with the process control system 10 by entering information. The human-machine interface component can either be an elementary component or a complex component. The complex components are assembled from a collection of elementary components.

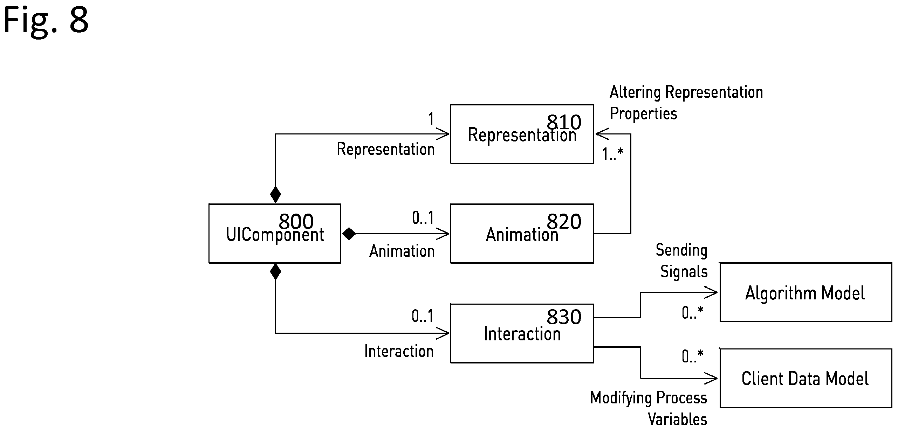

The human-machine interface component 800 is shown in Fig. 8 and is characterized by properties which are categorized by representation properties 810, animation properties 820, and interaction properties 830. The representation properties 810 define the initial appearance of the user interface component 800 and include, but are not limited to position, size, background and border color. The animation properties 820 define how representation properties 810, i.e. the appearance of the user interface component 800, will be changed according to current process data. For example, the animation properties 800 could indicate that a background color will be changed from blue to red when a certain process value becomes greater than a particular value. The interaction properties 830 define how the user might interact with the user interface component 800 and what action should be performed as the result of the interaction of the user. In other words, the representation properties 810 and the animation properties 820 convey information to the user, whereas the interaction properties 830 allow the user to enter information.

Examples of the elementary user interface components include but are not limited to alarm control, button, checkbox, checkbox Array, dropdown lists, gauge, geometrical objects (e.g. polyline, rectangles, ellipses, ...), image, input, radio button, radio button group, slider, text label, trend (real-time, historical), video, web view. Examples of more complex user interface components include but are limited to simple container, table, tree.

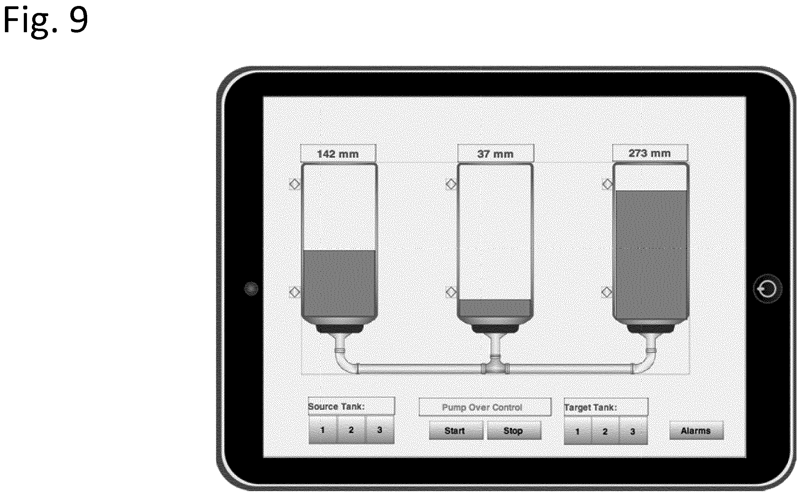

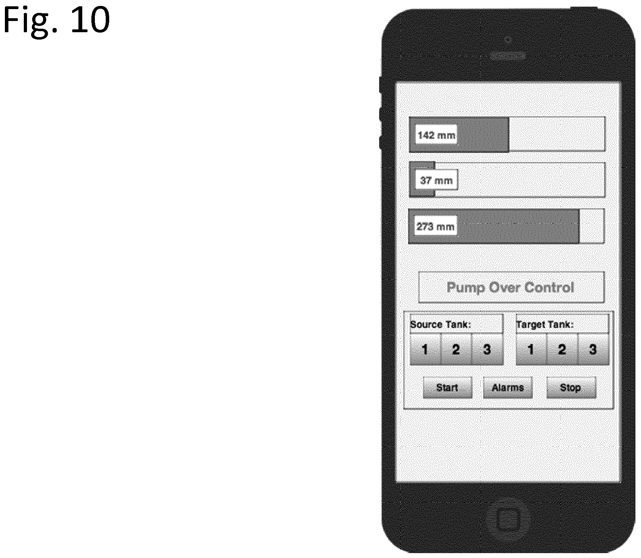

A non-limiting example of the invention will now be discussed using the automated plant 100 of Fig 1 and how the human-machine interface is generated on a tablet 70 (see Fig. 9) and on a smartphone 80 (see Fig. 10).

The user interface of Fig. 2 was designed using the display processor 45 and the workstation 50 to be executed on the workstation 60 with a 19" display. Because of the display size, it is possible to show lots of details like the valves, the pipes, and the fuel level sensors which are equipped to the tanks. In addition to get the current operative states of the process, the operators might better understand the context of the process and its automation facilities.

Fig. 9 shows the user interface of the same process tailored to be executed on a tablet computer 70. Instead of 19" of display size, only 10" is available. Furthermore, instead of a mouse and a keyboard, multi touch is available.

Because of the smaller screen size of the tablet 70, some details must be left out and other information needs a re-layout. The human-machine interface of the tablet 70 only displays that the tanks 220a-c are somehow connected. The human-machine interface does not show the exact relation between the tanks, because this is not so important in this context of use. The decision about which elements to incorporate into the human-machine interface on the tablet 70 will be explained later.

Fig. 10 shows the user interface tailored to be executed on the smartphone 80. Because of the even more limited screen size, more details must be left out from the human-machine interface. The operators will not get any impression of the context of the plant facilities. However, the operators will get all relevant process information and are able to interact with the process.

The process control system and method helps the developer and the engineers to convert the user interface of Fig. 1 into a second design of the user interface as shown in Fig.9 and then into a third design of the user interface as shown in Fig. 10.

The human-machine interface is generally defined for a display with the largest screen size using the workstation 50 and is transformed automatically or semi-automatically, as outlined in Figs. 11A and 11B to the other designs for display on the different devices (with smaller screen sizes) by means of the display processor 45. One issue to be decided in carrying out the horizontal transformation is the view entities to be displayed on the different devices. This depends on the importance of the view entities to the human machine interface. In one non-limiting example, the view entities for display are identified by finding areas on the human-machine interface with a high "gravity". This is done by identifying sets of view entities, which are close together and output process data. For example, each of the tanks 220a-c of Fig. 2 is such an area. It will be seen in Fig. 2 that there is a text label 250a-c textually displaying the value, the background of the tank 230a-c graphically displays the same value, the fuel level sensors 225a-f display sensor data. At the bottom and at the top, there are images valves 240a-g displaying the state of the related real valve.

This strong gravity will keep the view entities closely together as long as possible. The gravity will be calculated in each iteration for the development of the visualization application model and is based on the input visualization application model 1105. This information relating to the gravity is stored in the output visualization application model 1115. In the change from Figure 2 to Figure 9 only the valves 240a-g at the top and at the bottom will be removed while the text labels 250a-c at the very top will be kept. This is because the text label 250a-c and the background image show the value of the same process variable in two different ways. The visualization application model of Figure 2 is the input model 1105 and the visualization application model of Figure 9 is the output model 1115. All models are stored in the model repository 35.

The method and system will also analyze the user interface to identify human-machine interface components 800 defining interaction properties 830. The interaction properties 830 are those properties that reflect how the user will interact with the HMI component 800 and what action is performed as a result of this interaction. For example, the interaction properties will include information about how the user reacts with one of the buttons 260a or 260b, e.g. using a single tap or a long tap, and the action performed is to alter process data values in the process controller 20.

The buttons 260a write values into the same process variable. The buttons 260b write values into the same process variable. Start and stop buttons 260c will also write a certain value into the same process variable. Because buttons 260a, 260b, and 260c each are aligned so close together and refer to the same process variable, the method and apparatus treats them as connected elements and the connected elements will never be torn apart, as can be seen in Figs. 2, 9 and 10.

## Claims

1. A process control system (10) for an automated plant (100) comprising:
a plurality of displays (110) for displaying a process monitoring display of the automated plant (100) on one or more devices, the one or more devices running a plurality of device platforms;
a database (30) connectable to one or more of sensors (225a-g; 235) or control elements (240) in the automated plant (100), the database (30) comprising process data;
a model repository (35) comprising at least platform information, an initial visual applications model (1105) generated on a first one of the plurality of displays (110), and another visual applications model (1115) adapted for use on another one of the plurality of displays (110), wherein the platform information comprises information about the plurality of displays (110) for the device platform, the initial visual applications model (1105) comprises a plurality of view entities, and at least one of process control metadata for controlling the control elements (240) or measuring metadata defining measurements receivable from the plurality of sensors (225a-g; 235), and the other visual applications model (1115) generated from the initial visual applications model (1105) using the platform information;
a processor (40) connected to the database (30) and the display (110); and
a display processor (45) for generating for the other one of the plurality of displays (110) the generated other visual applications model.

2. The process control system of claim 1, wherein the display processor (45) selects for the other visual applications model a subset of the view entities based on the platform information.

3. The process control system of claim 1 or 2, wherein the view entities include at least one of measurement metadata or process control metadata.

4. The process control system of any one of the above claims, wherein the generating of the other visual applications model (1115) for another one of the plurality of displays is carried out at development time.

5. A computer-implemented method to generate a display, for one or more devices, of an automated plant (100) comprising a plurality of automated elements, and wherein the one or more devices run a plurality of platforms, the method comprising:
creation (1110) of an initial visualisation applications model (1115) on a first device (110) using one or more view entities and platform information;
storing the initial visual applications model (1105) in a model repository (35);
generating, using platform information for a second device and corresponding view entities for the second device, another visual applications model (1115) for display for the second device from the created and stored initial visualisation applications model (1105); and
storing the other visual applications model (1115) into the model repository (35).

6. The computer-implemented method of claim 5, wherein the creation of the initial visual applications model (1105) and the generating of the other visual applications model (1115) for the display for the second device is carried out in a development phase.

7. The computer-implemented method of claim 5 or 6, wherein the generating of the display for the second device further comprises using the initial visual applications model (1105), platform information, process control metadata and measurement metadata.

8. The computer-implemented method of one of claim 5 to 7, further comprising identification of transformable ones of the view entities in the visual applications model by identifying ones of closely-spaced view entities, connected view entities and changeable view entities.

9. The computer-implemented method of claim 8.

10. The computer-implemented method of one of claims 5 to 9, wherein
the generation of the other visual applications model (1115) from the initial visualisation applications model (1105) comprises accessing platform information for the further device; and
using the accessed platform information generate the other visualisation applications model (1115).

11. The computer-implemented method of one of claims 5 to 10, further comprising:
generating process control live data on the one or more devices;
sending the process control live data to one or more of the plurality of automated elements; and
updating the display (210).

12. The computer-implemented method of one of claims 5 to 11, further comprising:
receiving measurement live data from one or more sensors in the automated plant (100); and
updating the display (210).

13. The computer implemented method of any one of claims 5 to 12, wherein the extraction of the one or more view entities is dependent on the platform information.

14. The computer-implemented method of claims 8 to 13, wherein the view entities comprise variable values for displaying at least one of the process control live data or the measurement live data.

15. A computer program product stored in a non-tangible form on a storage device and comprising instructions for performing the computer-implemented method of one of claims 5 to 14.

## Patentansprüche

1. Prozesssteuersystem (10) für eine automatisierte Anlage (100), umfassend:
eine Vielzahl von Anzeigen (110) zum Anzeigen einer Prozessüberwachungsanzeige der automatisierten Anlage (100) auf einer oder mehreren Vorrichtungen, die eine oder mehrere Vorrichtungen betreiben eine Vielzahl von Vorrichtungsplattformen;
eine Datenbank (30), die mit einem oder mehreren Sensoren (225a-g; 235) oder Steuerelementen (240) in der automatisierten Anlage (100) verbindbar ist, die Datenbank (30) umfasst Prozessdaten;
ein Modell-Entwurfsmuster (35), das mindestens Plattforminformation/en, ein initiales visuelles Anwendungsmodell (1105), das auf einer ersten aus der Vielzahl von Anzeigen (110) erzeugt wird, und ein anderes visuelles Anwendungsmodell (1115), das zur Verwendung auf einer anderen aus der Vielzahl von Anzeigen (110) geeignet ist, umfasst, wobei die Plattforminformation/en Information/en über die Vielzahl von Anzeigen (110) für die Vorrichtungsplattform umfassen, das initiale visuelle Anwendungsmodell (1105) eine Vielzahl von Ansichtsentitäten umfasst, und mindestens eine von Prozesssteuermetadaten zum Steuern der Steuerelemente (240) oder Messen von Metadaten, die Messungen definieren, die von der Vielzahl von Sensoren (225a-g; 235) und das andere visuelle Anwendungsmodell (1115), das aus dem initialen visuellen Anwendungsmodell (1105) unter Verwendung der Plattforminformation/en erzeugt wird;
einen Prozessor (40), der mit der Datenbank (30) und der Anzeige (110) verbunden ist; und
einen Anzeigeprozessor (45) zum Erzeugen des erzeugten anderen visuellen Anwendungsmodells für die andere aus der Vielzahl von Anzeigen (110).

2. Prozesssteuersystem nach Anspruch 1, bei welchem der Anzeigeprozessor (45) für die anderen visuellen Anwendungen eine Teilmenge der Ansichtsentitäten basierend auf der/den Plattforminformation/en auswählt.

3. Prozesssteuersystem nach Anspruch 1 oder 2, bei welchem die Ansichtsentitäten mindestens eine von Messmetadaten oder Prozesssteuermetadaten beinhalten.

4. Prozesssteuersystem nach einem der obigen Ansprüche, bei welchem das Erzeugen des anderen visuellen Anwendungsmodells (1115) für eine andere aus der Vielzahl von Anzeigen durchgeführt wird in Entwicklungszeit.

5. Computerimplementiertes Verfahren zum Erzeugen einer Anzeige, für eine oder mehrere Vorrichtungen, einer automatisierten Anlage (100) umfassend eine Vielzahl von automatisierten Elementen, und wobei die eine oder die mehreren Vorrichtungen eine Vielzahl von Plattformen ausführen, das Verfahren umfasst:
Erstellen (1110) eines initialen Visualisierungsanwendungsmodell (1115) auf einer ersten Vorrichtung (110) unter Verwendung einer oder mehrerer Ansichtsentitäten und Plattforminformation/en;
Speichern des initialen visuellen Anwendungsmodells (1105) in einem Modell-Entwurfsmuster (35);
Erzeugen durch Verwenden von Plattforminformation/en für eine zweite Vorrichtung und korrespondierenden Ansichtsentitäten für die zweite Vorrichtung eines anderen visuellen Anwendungsmodells (1115) zur Anzeige für die zweite Vorrichtung aus dem erstellten und gespeicherten initialen Visualisierungsanwendungsmodell (1105); und
Speichern des anderen visuellen Anwendungsmodells (1115) in das Modell-Entwurfsmuster (35).

6. Computerimplementiertes Verfahren nach Anspruch 5, bei welchem die Erstellung des initialen visuellen Anwendungsmodells (1105) und die Erzeugung des anderen visuellen Anwendungsmodells (1115) für die Anzeige für die zweite Vorrichtung in einer Entwicklungsphase durchgeführt wird.

7. Computerimplementiertes Verfahren nach Anspruch 5 oder 6, bei welchem das Erzeugen der Anzeige für die zweite Vorrichtung ferner die Verwendung des initialen visuellen Anwendungsmodells (1105), Plattforminformation/en, Prozesssteuermetadaten und Messmetadaten umfasst.

8. Computerimplementiertes Verfahren nach einem der Ansprüche 5 bis 7, ferner umfassend die Identifizierung von transformierbaren der Ansichtsentitäten im visuellen Anwendungsmodell durch Identifizierung von eng beieinander liegenden Ansichtsentitäten, verbundenen Ansichtsentitäten und veränderbaren Ansichtsentitäten.

9. Computerimplementiertes Verfahren nach Anspruch 8.

10. Computerimplementiertes Verfahren nach einem der Ansprüche 5 bis 9, bei welchem
das Erzeugen des anderen visuellen Anwendungsmodells (1115) aus dem initialen Visualisierungsanwendungsmodell (1105) den Zugriff auf Plattforminformation/en für die andere Vorrichtung umfasst; und
Verwenden der zugänglichen Plattforminformation/en Erzeugen das andere Visualisierungsanwendungsmodell (1115).

11. Computerimplementiertes Verfahren nach einem der Ansprüche 5 bis 10, ferner umfassend:
Erzeugen von Prozesssteuer-Live-Daten auf einem oder mehreren Vorrichtungen;
Senden der Prozesssteuer-Live-Daten an eines oder mehrere der Vielzahl von automatisierten Elementen; und
Aktualisieren der Anzeige (210).

12. Computerimplementiertes Verfahren nach einem der Ansprüche 5 bis 11, ferner umfassend:
Empfangen von Mess-Live-Daten von einem oder mehreren Sensoren in der automatisierten Anlage (100); und
Aktualisieren der Anzeige (210).

13. Computerimplementiertes Verfahren nach einem der Ansprüche 5 bis 12, bei welchem die Entnahme der einen oder mehreren Ansichtsentitäten von den Plattforminformation/en abhängig ist.

14. Computerimplementiertes Verfahren nach den Ansprüchen 8 bis 13, bei welchem die Ansichtsentitäten variable Werte zum Anzeigen mindestens eines der Prozesssteuer-Live-Daten oder der Mess-Live-Daten umfassen.

15. Computerprogrammprodukt, das in einer nicht greifbaren Form auf einer Speichervorrichtung gespeichert ist und Anweisungen zur Ausführung des computerimplementierten Verfahrens nach einem der Ansprüche 5 bis 14 umfasst.

## Revendications

1. Système de commande de processus (10) pour une installation automatisée (100) comprenant :
une pluralité d'affichages (110) pour afficher un affichage de surveillance de processus de l'installation automatisée (100) sur un ou plusieurs dispositifs, les un ou plusieurs dispositifs faisant fonctionner une pluralité de plateformes de dispositif ;
une base de données (30) pouvant être connectée à un ou plusieurs capteurs (225a-g ; 235) ou éléments de commande (240) dans l'installation automatisée (100), la base de données (30) comprenant des données de processus ;
un référentiel de modèles (35) comprenant au moins des informations de plateforme, un modèle initial d'applications visuel(les) (1105) généré sur un premier écran de la pluralité d'écrans (110), et un autre modèle d'applications visuelles (1115) adapté pour utilisation sur un autre écran de la pluralité d'écrans (110), dans lequel les informations de plateforme comprennent des informations sur la pluralité d'affichages (110) pour la plateforme de dispositif, le modèle initial d'applications visuelles (1105) comprend une pluralité d'entités de vue, et au moins une métadonnée de commande de processus pour commander les éléments de commande (240) ou mesurer des métadonnées définissant des mesures recevables provenant de la pluralité de capteurs (225a-g ; 235), et l'autre modèle d'applications visuelles (1115) généré à partir du modèle initial d'applications visuelles (1105) en utilisant les informations de plateforme;
un processeur (40) connecté à la base de données (30) et à l'affichage (110) ; et
un processeur d'affichage (45) pour générer, pour l'autre de la pluralité d'affichages (110), l'autre modèle d'applications visuelles généré.

2. Système de commande de processus selon la revendication 1, dans lequel le processeur d'affichage (45) sélectionne pour l'autre modèle d'applications visuelles un sous-ensemble des entités de vue sur la base des informations de plateforme.

3. Système de commande de processus selon la revendication 1 ou 2, dans lequel les entités de vue comprennent au moins une métadonnée parmi une métadonnée de mesure ou une métadonnée de commande de processus.

4. Système de commande de processus selon l'une quelconque des revendications précédentes, dans lequel la génération de l'autre modèle d'applications visuelles (1115) pour un autre de la pluralité d'affichages est réalisée au moment du développement.

5. Procédé mis en œuvre par ordinateur pour générer un affichage, pour un ou plusieurs dispositifs, d'une installation automatisée (100) comprenant une pluralité d'éléments automatisés, et dans lequel le ou les dispositifs font fonctionner une pluralité de plateformes, le procédé comprenant :
création (1110) d'un modèle initial d'applications de visualisation (1115) sur un premier dispositif (110) utilisant une ou plusieurs entités de vue et informations de plateforme;
stockage du modèle initial d'applications visuelles (1105) dans un référentiel de modèles (35);
générer, en utilisant des informations de plateforme pour un deuxième dispositif et des entités de vue correspondantes pour le deuxième dispositif, un autre modèle d'applications visuelles (1115) pour affichage pour le deuxième dispositif à partir du modèle initial d'applications de visualisation créé et stocké (1105); et
stocker l'autre modèle d'applications visuel(les) (1115) dans le référentiel de modèles (35).

6. Procédé mis en œuvre par ordinateur selon la revendication 5, dans lequel la création du modèle initial d'applications visuelles (1105) et la génération de l'autre modèle d'applications visuel(les) (1115) pour l'affichage du deuxième dispositif sont réalisées dans une phase de développement.

7. Procédé mis en œuvre par ordinateur selon la revendication 5 ou 6, dans lequel la génération de l'affichage pour le deuxième dispositif comprend en outre l'utilisation du modèle initial d'applications visuel(les) (1105), des informations de plateforme, des métadonnées de commande de processus et des métadonnées de mesure.

8. Procédé mis en œuvre par ordinateur selon l'une quelconque des revendications 5 à 7, comprenant en outre l'identification d'entités transformables des entités de vue dans le modèle d'applications visuelles en identifiant des entités parmi des entités de vue étroitement espacées, des entités de vue connectées et des entités de vue changeantes.

9. Procédé mis en œuvre par ordinateur selon la revendication 8.

10. Procédé mis en œuvre par ordinateur selon l'une quelconque des revendications 5 à 9, dans lequel
la génération de l'autre modèle d'applications visuelles (1115) à partir du modèle initial d'applications de visualisation (1105) comprend l'accès aux informations de plateforme pour le dispositif supplémentaire ; et
en utilisant les informations de la plateforme accédée, générer l'autre modèle d'applications de visualisation (1115).

11. Procédé mis en œuvre par ordinateur selon l'une quelconque des revendications 5 à 10, comprenant en outre :
la génération de données en direct de commande de processus sur le ou les dispositifs ;
l'envoi des données en direct de commande de processus à un ou plusieurs éléments de la pluralité d'éléments automatisés ; et
la mise à jour de l'affichage (210).

12. Procédé mis en œuvre par ordinateur selon l'une quelconque des revendications 5 à 11, comprenant en outre :
recevoir des données de mesure en direct d'un ou de plusieurs capteurs de l'installation automatisée (100) ; et
la mise à jour de l'affichage (210).

13. Procédé mis en œuvre par ordinateur selon l'une quelconque des revendications 5 à 12, dans lequel l'extraction d'une ou plusieurs entités de vue dépend des informations de plateforme.

14. Procédé mis en œuvre par ordinateur selon l'une quelconque des revendications 8 à 13, dans lequel les entités de vue comprennent des valeurs variables pour afficher au moins de données parmi des données en direct de commande de processus ou les données en direct de mesure.

15. Produit de programme d'ordinateur stocké sous une forme non tangible sur un dispositif de stockage et comprenant des instructions pour exécuter la méthode mise en œuvre par ordinateur de l'une des revendications 5 à 14.
